# EUROPEAN PATENT SPECIFICATION

(11) **EP 3 199 781 B1**
(45) Date of publication and mention of the grant of the patent: **01.05.2019**
(21) Application number: 16152853.4
(22) Date of filing: 27.01.2016
(51) Int. Cl.: F02C 7/228, F02C 9/28

(54) **A GAS TURBINE AND A CORRESPONDING METHOD FOR CONTROLLING A GAS TURBINE OPERATION WITH SELECETED TURBINE OUTLET TEMPERATURE SENSORS**
GASTURBINE UND DAZUGEHÖRIGES VERFAHREN ZUR STEUERUNG EINER GASTURBINENOPERATION MIT AUSGEWÄHLTEN TURBINENAUSGANGSTEMPERATURSENSOREN
TURBINE À GAZ ET PROCÉDÉ CORRESPONDANT POUR COMMANDER UN FONCTIONNEMENT D'UNE TURBINE À GAZ AVEC DES CAPTEURS DE TEMPÉRATURE DE SORTIE DE TURBINE SÉLECTIONNÉS

(43) Date of publication of application: 02.08.2017
(73) Proprietor: Ansaldo Energia IP UK Limited, London W1G 9DQ (GB)
(72) Inventor: Zhang, Mengbin, 5400 Baden (CH); Therkorn, Dirk, 5400 Baden (CH); Bernero, Stefano, 5400 Baden (CH); Gassner, Martin, 5400 Baden (CH); Lonneux, Vincent, 5400 Baden (CH)
(74) Representative: Bernotti, Andrea

(56) References cited:
- EP-A1- 2 469 041
- EP-A1- 2 835 516
- US-A1- 2006 090 471
- US-A1- 2006 245 914

## Description

### Technical field

The invention refers to a method for operating a gas turbine using selected turbine outlet temperature measurements. The invention additionally refers to a gas turbine with a controller which is configured and adapted to carry out such a method.

### Background of the disclosure

The turbine outlet temperature is one parameter which can be used to control the operation of a gas turbine and for protection of a gas turbine during operation. An example for the control of a gas turbine using the turbine outlet temperatures has been disclosed for example in the EP2071157 A1.

The turbine outlet temperature can also be used for gas turbines with sequential combustion. The control of gas turbines with sequential combustion has been the object of various documents in the past. A basic operating concept for a gas turbine with sequential combustion is for example described in the EP0718470 A2.

A reliable and precise measurement of the turbine outlet temperature is a precondition for a reliable and precise control of the gas turbine operation over the whole load range.

Due to increased power generation by unsteady renewable sources like wind or solar existing gas turbine based power plants are increasingly used to balance power demand and to stabilize the grid. Thus, improved operational flexibility is required. This implies that gas turbines are often operated at lower load than the base load design point, i.e. at lower combustor inlet and firing temperatures. In addition fuel from different sources with different fuel gas composition is used depending on price and availability.

At the same time, emission limit values and overall emission permits are becoming more stringent, so that it is required to operate at lower emission values, keep low emissions also at part load operation, during transients, as these also count for cumulative emission limits, and for different fuel compositions. To assure low emissions and stable operation an accurate and robust determination of the turbine outlet temperature is required.

Typically the arithmetic average of all turbine outlet temperature measurements is determined in a gas turbine controller and used for controlling the gas turbine operation. Theoretically, averaging of all individual temperature measurements is the best way to obtain a turbine exit temperature.

One means to expand the load range with stable clean combustion so called burner staging, i.e. operating different burners with different or reduced fuel flows or even switching off individual burners to allow operation of the remaining burners with a richer fuel air mixture.

Staging to improve combustion stability at high relative loads close to base load of the gas turbine typically only causes small deviation in the hot gas temperature and has only a small influence on the average measured turbine outlet temperature. However, for example when the fuel supply to a burner is completely stopped at low load the hot gas temperature has significant variations and the turbine outlet temperature distribution is inhomogeneous. As a result the average turbine outlet temperature cannot be used to estimate the hot gas temperature of the burners in operation with sufficient precision.

The cold burners can significantly reduce the average turbine outlet temperature. When using the averaged measured turbine outlet temperature for control of the gas turbine the controller adjusts the operation to compensate for these changes in the averaged turbine outlet temperature. For example the controller can increase the fuel flow to keep the measured turbine outlet temperature (respectively the turbine inlet temperature TIT of the turbine) at the target temperature. If some of the burners are actually switched off or operating with a reduced fuel supply the remaining burners operate at higher hot gas temperatures.

For gas turbines with sequential combustion the fuel can be redistributed between burners in the first combustor and between burners in the second combustor.

EP2835516 discloses a method for operating a gas turbine with sequential combustion and low CO emissions depending on the burner exhaust temperature of at least one of the operative burners.

EP2469041 discloses a method of detecting a predetermined condition in a gas turbine and to a failure detection system for a gas turbine. The method comprises the step of measuring a temperature over time at each of at least three probing points located in the gas turbine.

### Summary of the disclosure

One object of the present disclosure is a method for stable and reliable operation of a gas turbine when the fuel supply to an individual burner or a group of burners is reduced or stopped. The gas turbine comprises a compressor, a combustor with at least two burners, a turbine downstream of the combustor, and a total number of turbine outlet temperature measurements.

The disclosed method for operating a gas turbine comprises the steps of:
- supplying a first fuel flow to one of the burners and supplying a second fuel flow to another one of the burners of the same combustor wherein the first fuel flow is smaller than the second fuel flow;
   measuring the turbine outlet temperature of the turbine with turbine outlet temperature measurements of the respective turbine,
- selecting a proper subset of turbine outlet temperature measurements which is smaller than the total number of the turbine outlet temperature measurements,
- averaging the measured temperatures of the selected turbine outlet temperature measurements to obtain a trimmed turbine outlet temperature, and
- controlling the operation of the gas turbine with the trimmed turbine outlet temperature.

Controlling the operation of the gas turbine can for example comprise the control of the trimmed turbine outlet temperature to a target value. It can also comprise the control of a turbine inlet temperature to a target value wherein the turbine inlet temperature is obtained based on the trimmed turbine outlet temperature. The fuel flow or the angle of a variable inlet guide vane of the compressor can for example be used as actuating variable in a closed loop control of these temperatures. The target value of these temperatures can for example depend on a power set point, emission targets, or life time targets.

The turbine outlet temperature measurements, being sensors which indicate the temperature, can for example be distributed to cover the whole flow area of the turbine outlet, in particular that each temperature measurement is in the center of an assigned section of the flow area or flow duct wherein each section has the same area. For an exhaust duct with inhomogeneous temperature or velocity profiles it can be advantageous to distribute the temperature measurements such that they are representative for sections with equal exhaust mass flow through each assigned section.

According to an embodiment of the method the first fuel flow is zero, and the second fuel flow is greater than zero.

A combustor can comprise a plurality of burners upstream of an annular combustion chamber or can comprise a plurality of burners of a plurality of can combustion chambers.

According to the method the turbine outlet temperature measurements with good data quality are identified. Only turbine outlet temperature measurements with good data quality are selected for averaging the turbine outlet temperature. In this embodiment the trimmed turbine outlet temperature is averaged based on a number of selected turbine outlet measurement values with good data quality which is smaller than the total number of available turbine outlet temperature measurements with good data quality.

Good data quality can be determined for example by confirming that no bad data quality signal is send from the measurement chain starting at the temperature sensor and leading via transducers and data lines to the controller. Good data quality can also be determined by comparing the measured temperature value with the average of all measured temperatures, or with an expected value which can for example depend on the operating conditions of the gas turbine. The relative load or inlet guide vane position, time since start up could be indicative of the operating condition. The corresponding expected turbine outlet temperature can for example be provided in a look up table. If the measured value is outside the expected range it will be considered to have bad data quality and is disregarded.

According to the method a proper subset of the turbine outlet temperature measurements is selected for obtaining the trimmed turbine outlet temperature. The selected proper subset of turbine outlet temperature measurements comprises the turbine outlet temperature measurements with a specified number of the highest measurement values. The subset is a subset based on the total number of turbine outlet measurements with good data quality.

In yet another embodiment of the method the selected proper subset for averaging the trimmed turbine outlet temperature consists of the i highest to the j highest turbine outlet temperature measurements wherein i, and j are natural numbers. Further, i is 2 or larger than 2, j is equal or larger to i, and i and j are smaller than the total number of outlet temperature measurements.

Before a complete failure a temperature measurement might drift to falsely indicate higher that actual temperatures before the measurement chain can recognize that such a temperature measurement has bad data quality. According to one embodiment the highest or the m highest turbine outlet temperature measurements are not used for averaging the turbine outlet temperature. Typically it is sufficient to simply neglect the single highest temperature measurement because it is very unlikely that more than one temperature measurement has a significant drift which is not recognized as a measurement error. However, two or more of the highest temperature measurement values can be neglected or skipped. Two or more than two measurements might be omitted if a very large number of turbine outlet temperature measurements is used, e.g. if a total of more than 20 or more than 30 measurements is used which increases the probability of drifts occurring simultaneously.

According to another embodiment of the method the proper subset of the turbine outlet temperature measurements is selected for obtaining the trimmed turbine outlet temperature. This proper subset comprises at least one turbine outlet temperature measurement which is offset in a circumferential direction around the axis of the gas turbine relative to the circumverential location of a burner to which a second fuel flow is supplied by an offset angle. The offset angle corresponds to the circumferential offset around the axis of the gas turbine to which the hotgas is subjected to when flowing from the combustor through the turbine to the location of turbine outlet temperature measurements .

According to another embodiment of the method the proper subset of the turbine outlet temperature measurements is selected for obtaining the trimmed turbine outlet temperature. This proper subset excludes at least one turbine outlet temperature measurement which is offset in a circumferential direction around the axis of the gas turbine from the circumverential location of a burner to which a first fuel flow is supplied by an offset angle. The offset angle corresponds to the circumferential offset around the axis of the gas turbine the hotgas is subjected to when flowing from the combustor through the turbine to the turbine outlet temperature measurements.

In a further embodiment of the method the offset angle is given as a function of a gas turbine load, an inlet angle of a variable inlet guide vane, a turbine inlet temperature, or the average turbine outlet temperature. According to a further embodiment of the method the trimmed turbine outlet temperature is controlled to a set point temperature or the trimmed turbine outlet temperature is used to control the combustor temperature to a set point temperature. The control is carried out with a closed loop control circuit using the fuel flow to the combustor as correcting variable, i.e. the fuel flow is increases if the trimmed turbine outlet temperature is below the set point temperature, and the fuel flow is reduced if the trimmed turbine outlet temperature is above the set point temperature. The trimmed turbine outlet temperature can for example be used to control the combustor temperature to a set point temperature with the help of a so called turbine inlet temperature formula which is used to approximate the turbine inlet temperature or combustor exit temperature based on the turbine outlet temperature and other operating parameters of the gas turbine such as for example the combustor pressure or the compressor inlet temperature.

According to another further embodiment of the method an average turbine inlet temperature is calculated using the average turbine outlet temperature which is based on all turbine outlet temperatures measurements. Further, a trimmed turbine inlet temperature is calculated using the trimmed turbine outlet temperature. For controlling the operation of the gas turbine the higher value of the average turbine inlet temperature and of the trimmed turbine inlet temperature. Calculating the turbine inlet temperature can for example comprise the calculation with the help of a simulation model of the gas turbine or using a turbine inlet temperature formula.

According to yet another embodiment of the method an average turbine outlet temperature based on all (i.e. with good data quality) turbine outlet temperature measurements are used for controlling the operation of the gas turbine when a parameter indicative of the operating condition of the gas turbine is above a threshold value. For operation of the gas turbine when the parameter indicative of the operating condition of the gas turbine is below the threshold value limit the trimmed turbine outlet temperature is used for controlling the operation of the gas turbine. The parameter indicative of the operating condition can for example be the relative load, the total fuel flow, the turbine pressure ratio, or the calculated turbine inlet temperature.

Equally, all available turbine outlet temperatures measurements can be used for calculating the trimmed turbine outlet temperature for operation of the gas turbine above when a parameter indicative of the operating condition of the gas turbine is above a threshold value, and a trimmed turbine outlet temperature based on the selected turbine outlet temperatures measurements. That is only selected turbine outlet temperatures measurements are used for calculating the trimmed turbine outlet temperature when the parameter indicative of the operating condition of the gas turbine is below the threshold valueof the gas turbine.

When using the relative load as parameter indicative of the operating condition of the gas turbine the relative load can for example be defined as the actual power divided by the base load power which can be produced by the gas turbine at the respective ambient conditions. The relative load limit above which all available turbine outlet temperature measurements are used for calculating the average turbine outlet temperature can for example be a value in a range of 20% to 50%, or in the range of 30% to 40% relative load.

According to one embodiment of the method the average of all available turbine outlet temperature measurements is used for controlling the gas turbine when all burners of a combustor are operating, respectively when all burners of a combustor are operating without a flow reduction due to a staging valve. The trimmed turbine outlet temperature is used for controlling when the fuel flow to at least one burner of a combustor is reduced or stopped.

According to yet a further embodiment of the method a turbine inlet temperature error is calculated based on an average turbine outlet temperature, and a trimmed hot gas error is calculated based on the trimmed turbine outlet temperature. Turbine inlet temperature error can for example be the difference between a turbine inlet temperature calculated with a turbine inlet temperature formula using the average turbine outlet temperature as input, and a limit value for the turbine inlet temperature. The trimmed hot gas temperature error can for example be the difference between a hot gas temperature calculated with a hot gas temperature formula using the trimmed turbine outlet temperature as input, and limit the value for the hot gas temperature. The turbine inlet temperature error and the hot gas temperature error are scaled to match each other. The lower value of the scaled temperature errors is used for control and protection of the gas turbine. Instead of using a turbine inlet temperature formula and hot gas temperature formula a thermodynamic model of the gas turbine can be used to calculate the turbine inlet temperature and the hot gas temperature.

A hot gas temperature formula is turbine inlet temperature or combustor exit temperature is approximated based on the turbine outlet temperature and other operating parameters of the gas turbine such as for example the combustor pressure or the compressor inlet temperature

A hot gas temperature formula is used to approximate the local hot gas temperature at the turbine inlet temperature, respectively at the outlet of a combustor downstream of an individual burner based on the turbine outlet temperature and other operating parameters of the gas turbine such as for example the combustor pressure or the compressor inlet temperature.

The matching of the turbine inlet temperature to the hot gas temperature error can for example be done by multiplying the inlet temperature error with a scaling factor to obtain a scaled hot gas temperature error or by dividing the hot gas temperature error by the scaling factor to obtain a trimmed inlet temperature error.

According to a further embodiment of the method the scaling factor is a function of the gas turbine load, the inlet angle of a variable inlet guide vane, the turbine inlet temperature, or the average turbine outlet temperature, or a combination of factors comprising at least one of these factors.

According to yet another embodiment the method is applied to a gas turbine which is configured as a sequential combustion gas turbine. The sequential combustion gas turbine has a first combustor, a first turbine downstream of the first combustor, a second combustor downstream of said first turbine, and a second turbine downstream of said second combustor.

A total number of first turbine outlet temperature measurements is arranged downstream of the first turbine. According to the method selected first turbine outlet temperature measurements are averaged to obtain a trimmed first turbine outlet temperature.

The trimmed first turbine outlet temperature can be used for control of the sequential combustion gas turbine; in particular it can be used for control of the fuel supply to the first combustor.

According to yet another embodiment the method is applied to a gas turbine which is configured as a sequential combustion gas turbine with a total number of second turbine outlet temperature measurements arranged downstream of the second turbine. According to the method selected second turbine outlet temperature measurements are averaged to obtain a trimmed second turbine outlet temperature.

The trimmed second turbine outlet temperature can be used for control of the sequential combustion gas turbine; in particular it can be used for control of the fuel supply to the second combustor.

The method can be applied to gas turbines with a single combustor followed by a turbine. It can also be applied to the gas turbine which is configured as a sequential combustion gas turbine having a first combustor, a first turbine downstream of the first combustor, a second combustor downstream of said first turbine, and a second turbine downstream of said second combustor.

A sequential combustion gas turbine can have a total number of first turbine outlet temperature measurements downstream of the first turbine.

According to an embodiment of the method for operating a sequential combustion gas turbine selected first turbine outlet temperature measurements are averaged to obtain an average first turbine outlet temperature.

According to an embodiment all of the combustors upstream of the first turbine are in operation, and the first fuel flow to at least one burner of the second combustor is reduced. Reduced in this context can mean reduced to zero.

A sequential combustion gas turbine can have a total number of second turbine outlet temperature measurements. According to an embodiment of the method for operating a sequential combustion gas turbine selected second turbine outlet temperature measurements are averaged to obtain an average second turbine outlet temperature.

Besides the method a gas turbine comprising a compressor, at least a combustor, at least a turbine downstream of the combustor, a total number of turbine outlet temperature sensors, and a controller which is configured to carry out the method is part of the disclosure.

The gas turbine can be a gas turbine with a single combustor followed by one turbine. The gas turbine can also be a sequential combustion gas turbine having a first combustor, a first turbine downstream of the first combustor, a second combustor downstream of said first turbine, and a second turbine downstream of said second combustor.

### Brief description of the drawings

The disclosure, its nature as well as its advantages, shall be described in more detail below with the aid of the accompanying schematic drawings. Referring to the drawings:
Fig.1 shows a gas turbine with sequential combustion and a closed loop controller for its operation,
Fig. 2a shows the cross section II - II of the combustor with the fuel distribution system,
Fig. 2b shows the cross section II - II of the combustor with first turbine outlet temperature measurements,
Fig. 3 shows the cross section III - III of the second turbine outlet with second turbine outlet temperature measurements,
Fig. 4 shows an exemplary exhaust temperature distribution,
Fig. 5 shows exemplary control logic to determine a selected turbine inlet temperature error for control of the gas turbine.

### Embodiments of the disclosure

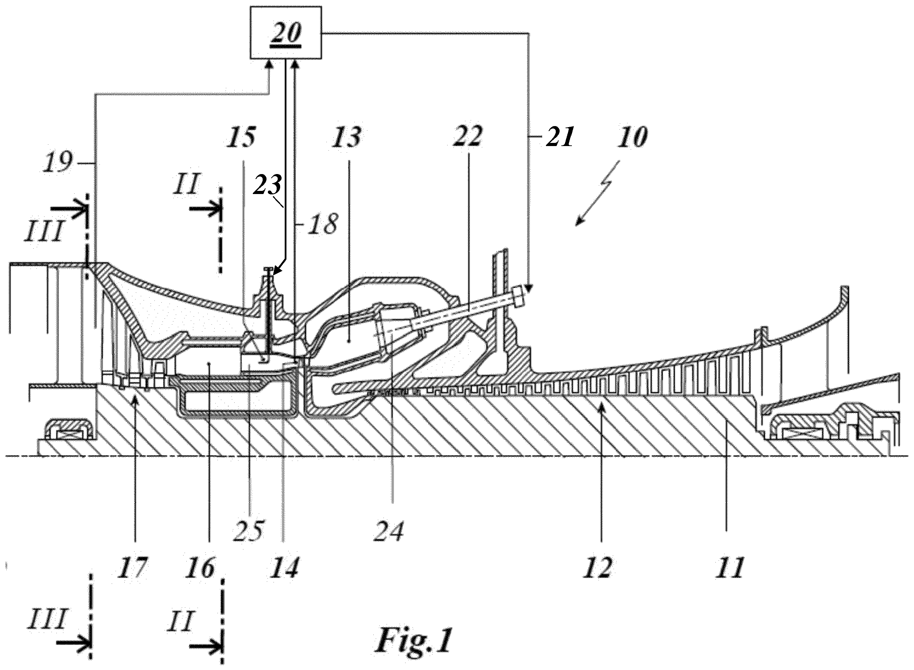

A control scheme of a gas turbine with sequential combustion (known for example for GT24 or GT26) is shown in Fig. 1. The gas turbine 10 comprises a rotor 11, which is surrounded by a concentric casing. A compressor 12 compresses air that enters a first combustor 13 with a burner of the first combustor 13 through a plenum. Fuel is supplied via a first combustor fuel supply 22. The resulting hot gas leaving the first combustor 13 drives a first turbine 14. Downstream of first turbine 14 fuel is injected via a fuel lance 15 into the exhaust gas of the first turbine 14 which still contains sufficient oxygen for further combustion. The fuel burns in the second combustor 16. The re-heated gas drives a second turbine 17 and finally exits the gas turbine 10. The first turbine outlet temperature measurement 18 can also be integrated or attached to the fuel lance 15.

The first turbine 14 is also called high-pressure turbine. The second turbine 17 is also called low-pressure turbine.

A controller 20, which controls the operation of gas turbine 10, receives measurement values from first turbine outlet temperature measurements 18 being measured at various points via a fuel lance 15 at the outlet of the first turbine 14. Furthermore, it receives measurement values of second turbine outlet temperature measurements 19 of the second turbine 17 being measured at various points (e.g. 20) at the outlet of the second turbine 17. Using the measured data the controller 20 controls the operation of the first combustor 13 by means of a first combustor fuel control line 21 and the operation of the second combustor 16 by means of a second combustor fuel control line 23.

The gas turbine system can be coupled to a generator (not shown) via the rotor 11. Typically, a gas turbine 10 further comprises a cooling system for the first turbine 14, the second turbine 17, and the sequential combustor arrangement, which is not shown as they are not the subject of this disclosure.

Exhaust gases leave the second turbine 17. The remaining heat of the exhaust gases is typically used in a subsequent water steam cycle, which is also not shown here.

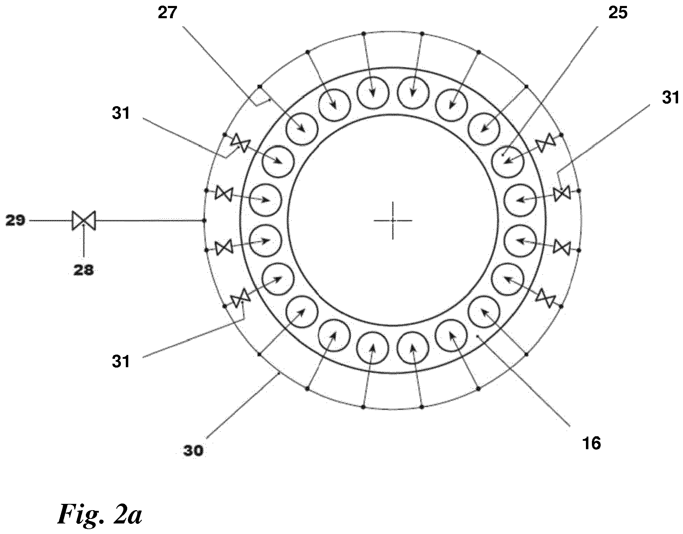

Fig. 2a shows a section through the second combustor 16 with burners of the second combustor 25, and also the fuel distribution system with a fuel ring main 30 and burner fuel feeds 27. Eight individual fuel valves 31 are arranged in eight of the burner fuel feeds 27. By closing an individual fuel valve 31, the fuel flow to individual burners 25 can be reduced or stopped and the fuel can be redistributed to the remaining burners 25. The overall fuel flow to the combustor 16 can be controlled via a control valve 28 which is arranged in the fuel feed 29 which supplies fuel to the fuel ring main 30.

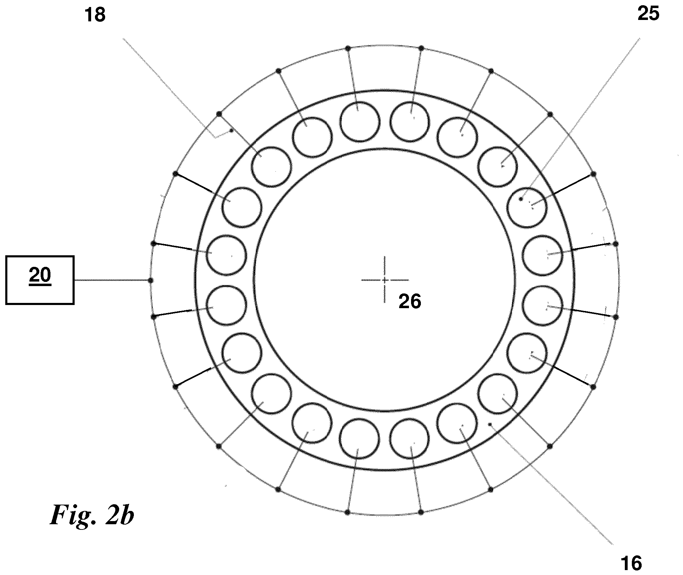

An example of an arrangement of the first turbine outlet temperature measurements 18 is shown in Fig. 2b. Fig. 2b shows the cross section II - II of Fig. 1 through the annular second combustor 16 with a plurality of burners of the second combustor 25 at the upstream end of the second combustor 16. In each burner of the second combustor 25 a first turbine outlet temperature measurement 18 is arranged which is connected to the controller 20.

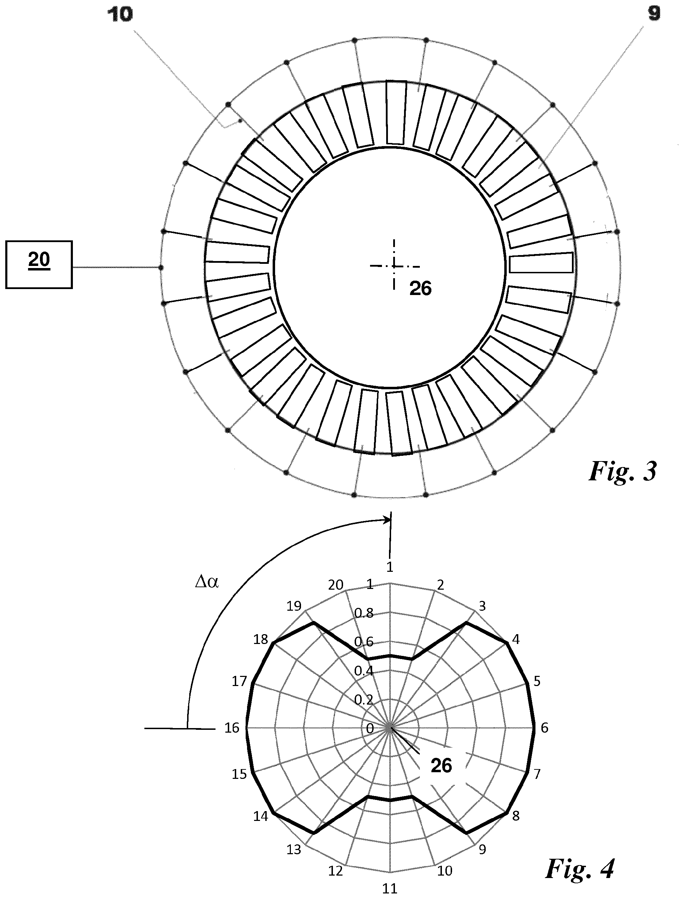

An example of an arrangement of the second turbine outlet temperature measurements 19 is shown in Fig. 3. Fig. 3 shows the cross section III - III of Fig. 1 with the outlet of the second turbine 17. A number of second turbine outlet temperature measurement 19 is arranged downstream of the second turbine which is connected to the controller 20. The number of second turbine 17 outlet temperature measurements can for example correspond to the number of burners of the second combustor 25 (in this example 20).

In Fig. 4 an example of the exhaust temperature distribution is shown. The exhaust temperature is measured at 20 locations which are numbered in clockwise direction from 1 to 20. The temperature itself is normalized with the maximum measured temperature. The example schematically shows the normalized exhaust temperature distribution for the burner and fuel distribution system shown in Fig. 2a with four burners switched off closest to the 3 o'clock and four burners switched off closest to the 9 o'clock position, i.e. the burners closest to the horizontal plane of the gas turbine are switched off. The six burners closest to the 12 o'clock and 6 o'clock (vertical top and bottom of the gas turbine) are operating. The operative burners lead to high exhaust temperatures while the exhaust temperature downstream of the inoperative burners is at a minimum.

The temperature distribution downstream of the turbine is offset in circumferential direction around the axis 26 of the gas turbine relative to the circumverential location of the burners to which a second fuel flow is supplied by an offset angle Δα. The offset angle Δα corresponds to the circumferential offset around the axis 26 of the gas turbine the hotgas is subjected to when traveling from the combustor through the turbine to the location of turbine outlet temperature measurements. The offset angle Δα in the example of Fig. 4 is 90°. Therefore the location of minimum temperatures is offset by 90° relative to the loaction of the burners which are swichted off and therefore produce the minimum inlet temperatures to the turbine. Analougously, the location of maximum temperatures is offset by 90° relative to the loaction of the burners which are operating with the unrestricted fuel flow and therefore produce the maximum inlet temperatures to the turbine.

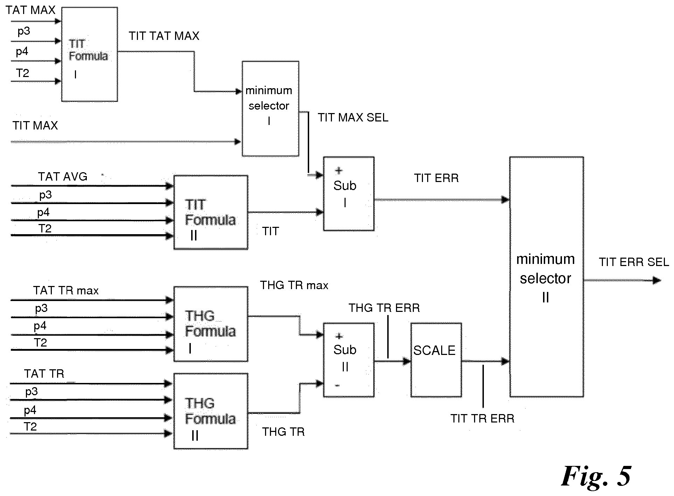

In Fig. 5 an exemplary control logic to determine a selected turbine inlet temperature error for the control of the gas turbine is depicted.

Based on the operating conditions of the gas turbine and a maximum allowable turbine outlet temperature TAT MAX a maximum calculated turbine inlet temperature for the maximum allowable turbine outlet temperature TIT TAT MAX is calculated in a turbine inlet temperature formula block one TIT Formula I. The smaller one of the maximum allowable turbine outlet temperature for the maximum allowable turbine outlet temperature TIT TAT MAX and the maximum allowable turbine outlet temperature TAT MAX is selected in the minimum selector I to obtain the selected maximum allowable turbine inlet temperature TIT MAX SEL.

Based on the operating conditions of the gas turbine and the measured average turbine outlet temperature TAT AVG a turbine inlet temperature TIT is calculated in a turbine inlet temperature formula block two TIT Formula II.

The difference between the selected maximum allowable turbine inlet temperature TIT MAX SEL and the turbine inlet temperature TIT is determined in the subtraction block I. As a result a turbine inlet temperature error TIT ERR is obtained.

Based on the operating conditions of the gas turbine and the maximum allowable trimmed turbine outlet temperature TAT TR MAX the maximum trimmed turbine outlet temperature THG TR MAX is calculated in a hot gas temperature calculation block one THG Formula I.

Based on the operating conditions of the gas turbine and the measured trimmed turbine outlet temperature TAT TR a trimmed hot gas temperature THG TR is calculated in a hot gas temperature formula block two THG Formula II.

The difference between the maximum trimmed turbine outlet temperature THG MAX TR and the trimmed hot gas temperature THG TR is determined in the subtraction block II. As a result a trimmed hot gas temperature error THG TR ERR is obtained.

The a trimmed hot gas temperature error THG TR ERR is converted to a trimmed turbine inlet temperature error TIT TR ERR in the function block for Scaling of hot gas temperature to turbine inlet temperature SCALE.

The smaller one of the turbine inlet temperature error TIT ERR and the trimmed turbine inlet temperature error TIT TR ERR is selected in the minimum selector II to obtain the selected turbine inlet temperature error TIT ERR SEL.

The selected turbine inlet temperature error TIT ERR SEL is used for control of the gas turbine, in particular for the control of the fuel flow with the control valve 28 (in Fig. 2a).

All the explained advantages are not limited to the specified combinations but can also be used in other combinations or alone without departing from the scope of the disclosure, if within the scope of the appended claims. Other possibilities are optionally conceivable, for example the second combustor can have can combustors.

### List of designations

- 10: gas turbine
- 11: rotor
- 12: compressor
- 13: first combustor
- 14: first turbine
- 15: fuel lance
- 16: second combustor
- 17: second turbine
- 18: first turbine outlet temperature measurement
- 19: second turbine outlet temperature measurement
- 20: controller
- 21: first combustor fuel control line
- 22: first combustor fuel supply
- 23: second combustor fuel control line
- 24: burner of the first combustor
- 25: burner of the second combustor
- 26: axis
- 27: burner fuel feed
- 28: control valve
- 29: fuel feed
- 30: fuel ring main
- 31: individual fuel valve
- Sub I: subtraction block I
- Sub II: subtraction block II
- Scale: Scaling of hot gas temperature to turbine inlet temperature
- TAT AVG: average turbine outlet temperature
- TAT MAX: maximum allowable turbine outlet temperature
- TAT TR: trimmed turbine outlet temperature
- TAT TR MAX: maximum allowable trimmed turbine outlet temperature
- TAT1 TR: trimmed first turbine outlet temperature
- TAT2 TR: trimmed second turbine outlet temperature
- THG: hot gas temperature (estimated)
- THG TR: trimmed hot gas temperature
- THG TR ERR: trimmed hot gas error
- THG-TR MAX: maximum trimmed turbine outlet temperature
- THG Formula I: hot gas temperature calculation block one
- THG Formula II: hot gas temperature calculation block two
- max(TAT1i): maximum turbine outlet temperature measurement
- TIT: turbine inlet temperature
- TIT AVG: averaged turbine inlet temperature
- TIT TR: trimmed turbine inlet temperature
- TIT ERR: turbine inlet temperature error
- TIT ERR SEL: selected turbine inlet temperature error
- TIT Formula I: turbine inlet temperature calculation block one
- TIT Formula II: turbine inlet temperature calculation block two
- TIT-MAX: maximum allowable turbine inlet temperature
- TIT-MAX SEL: selected maximum allowable turbine inlet temperature
- TIT TAT MAX: maximum calculated turbine inlet temperature for maximum allowable turbine outlet temperature
- TIT TR ERR: trimmed inlet temperature error
- Minimum selector I: logic block to select the minimum
- p3: turbine inlet pressure
- p4: turbine outlet pressure
- T2: compressor exit temperature
- Δα: offset angle

## Claims

1. Method for operating a gas turbine (10), the gas turbine (10) comprising a compressor (12), at least a combustor (13, 16) with at least two burners (24, 25), at least a turbine (14, 17) downstream of the combustor (13, 16), and a plurality of turbine outlet temperature sensors (18, 19), the method comprising the steps of:
- supplying a first fuel flow to one of the burners (24,25) of one combustor (13, 16), and supplying a second fuel flow to another one of the burners (24, 25) of the same combustor (13, 16) wherein the first fuel flow is smaller than the second fuel flow;
- measuring the turbine outlet temperature of the turbine (14, 17) with the turbine outlet temperature sensors (18, 19) of the respective turbine (14, 17);
- identifying turbine outlet temperature sensors (18, 19) with good data quality; and **characterized by**:
- selecting a proper subset of turbine outlet temperature sensors (18, 19) with good data quality which is smaller than a total number of the turbine outlet temperature sensors (18, 19) with good data quality;
- averaging the measured temperatures of the selected turbine outlet temperature sensors (18, 19) with good data quality to obtain a trimmed turbine outlet temperature (TAT TR); and
- controlling the operation of the gas turbine (10) with the trimmed turbine outlet temperature (TAT TR); wherein the proper subset of turbine outlet temperature sensors (18, 19) with good data quality comprises the turbine outlet temperature sensors (18, 19) with good data quality and with the highest measurement values.

2. Method as claimed in claim 1, **characterized in that** the first fuel flow is zero, and **in that** the second fuel flow is greater than zero.

3. Method as claimed in one of the claims 1 to 2, **characterized in that** the proper subset of the turbine outlet temperature sensors (18, 19) with good data quality is selected for obtaining the trimmed turbine outlet temperature (TAT TR), and **in that** the proper subset consists of the i highest to the j highest turbine outlet temperature sensors (18, 19) with good data quality, wherein i and j are natural numbers, i is 2 or larger than 2, j is equal to or larger than i, and i and j are smaller than the total number of outlet temperature sensors (18, 19) with good data quality.

4. Method as claimed in one of the claims 1 to 2, **characterized in that** the proper subset of the turbine outlet temperature sensors (18, 19) with good data quality is selected for obtaining the trimmed turbine outlet temperature (TAT TR), and **in that** the proper subset comprises at least one turbine outlet temperature sensors (18, 19) with good data quality which is offset in a circumferential direction around the axis of the gas turbine (10) from the circumferential location of a burner (24, 25) to which a second fuel flow is supplied by an offset angle (Δα) wherin the offset angle (Δα) corresponds to the circumferential offset around the axis of the gas turbine (10) to which the hotgas is subjected to when traveling from the combustor (13, 16) through the turbine (14, 16) to the turbine outlet temperature sensors (18, 19) with good data quality.

5. Method as claimed in one of the claims 1 to 2, **characterized in that** the proper subset of the turbine outlet temperature sensors (18, 19) with good data quality is selected for obtaining the trimmed turbine outlet temperature (TAT TR), and **in that** the proper subset excludes at least one turbine outlet temperature sensors (18, 19) with good data quality which is offset in a circumferential direction around the axis of the gas turbine (10) from the circumferential location of a burner (24, 25) to which a first fuel flow is supplied by an offset angle (Δα) wherein the offset angle (Δα) corresponds to the circumferential offset around the axis of the gas turbine (10) the hotgas is subjected to when traveling from the combustor (13, 16) through the turbine (14, 16) to the turbine outlet temperature sensors (18, 19) with good data quality.

6. Method as claimed in one of the claims 1 to 5, **characterized in that** an average turbine inlet temperature (TIT AVG) is calculated using the average turbine outlet temperature (TAT AVG) based on all turbine outlet temperatures sensors (18, 19) with good data quality and **in that** a trimmed turbine inlet temperature (TIT TR) is calculated using the trimmed turbine outlet temperature (TAT TR), and **in that** the higher value of the average turbine inlet temperature (TIT AVG) and of the trimmed turbine inlet temperature (TIT TR) is used for controlling the operation of the gas turbine (10).

7. Method as claimed in one of the claims 1 to 5, **characterized in that** an average turbine outlet temperature (TAT AVG) based on all turbine outlet temperatures sensors (18, 19) with good data quality is used for controlling the operation of the gas turbine (10) when a parameter indicative of the operating condition of the gas turbine (10) is above a threshold value, and **in that** the trimmed turbine outlet temperature (TAT TR) is used for controlling the operation of the gas turbine (10) when the parameter indicative of the operating condition of the gas turbine (10) is below the threshold value.

8. Method as claimed in one of the claims 1 to 7, **characterized in that** a turbine inlet temperature error (TIT ERR) is calculated based on an average turbine outlet temperatures (TAT AVG), **in that** a trimmed hot gas error (THG TR ERR) is calculated based on the trimmed turbine outlet temperature (TAT TR), **in that** the turbine inlet temperature error (TIT ERR) and the trimmed hot gas error (THG TR ERR) are scaled to match each other, and **in that** the lower value of the scaled temperature errors is used for control and protection of the gas turbine (10).

9. Method as claimed in claim 8, **characterized in that** the turbine inlet temperature error (TIT ERR) is multiplied by a scaling factor to obtain a scaled hot gas temperature error (THG ERR), or **in that** the trimmed hot gas temperature error (THG TR ERR) is divided by the scaling factor to obtain a trimmed inlet temperature error (TIT TR ERR).

10. Method as claimed in claim 8 or 9, **characterized in that** the scaling factor is a function of at least one of the gas turbine load, the inlet angle of a variable inlet guide vane (VIGV), the turbine inlet temperature (TIT), the average turbine outlet temperature (TAT AVG).

11. Method as claimed in one of the claims 1 to 10, **characterized in that** it is applied to a sequential combustion gas turbine having a first combustor (13), a first turbine (14) downstream of the first combustor (13), a total number of first turbine outlet temperature sensors (18) and a second combustor (16) downstream of said first turbine (14), and a second turbine (17) downstream of said second combustor (16), and **in that** selected first turbine outlet temperature sensors (18) of the first turbine (14) are averaged to obtain a trimmed first turbine outlet temperature (TAT1 TR).

12. Method as claimed in one of the claims 1 to 10, **characterized in that** it is applied to a sequential combustion gas turbine having a first combustor (13), a first turbine (14) downstream of the first combustor (13), a second combustor (16) downstream of said first turbine (14), a second turbine (17) downstream of said second combustor (16), and a total number of second turbine outlet temperature sensors (19) downstream of the second turbine (17), and **in that** selected second turbine outlet temperature sensors (19) of the second turbine (17) are averaged to obtain a trimmed second turbine outlet temperature (TAT2 TR).

13. Gas turbine (10) comprising a compressor (12), at least a combustor (13, 16), at least a turbine (14, 17) downstream of the combustor (13, 16), a total number of turbine outlet temperature sensors (18, 19), and a controller (20) **characterized in that** the controller (20) is configured to carry out the method according to one of the claim 1 to 12.

## Patentansprüche

1. Verfahren für den Betrieb einer Gasturbine (10), welche Gasturbine (10) einen Kompressor (12), mindestens eine Brennkammer (13, 16) mit mindestens zwei Brennern (24, 25), mindestens eine Turbine (14, 17) stromabwärts der Brennkammer (13, 16) und eine Vielzahl von Turbinenauslasstemperatursensoren (18, 19) aufweist, welches Verfahren die Schritte umfasst:
- Zuführen eines ersten Brennstoffstroms zu einem der Brenner (24, 25) einer der Brennkammern (13, 16) und Zuführen eines zweiten Brennstoffstroms zu einem anderen der Brenner (24, 25) derselben Brennkammer (13, 16), wobei der erste Brennstoffstrom kleiner ist als der zweite Brennstoffstrom;
- Messen der Turbinenauslasstemperatur der Turbine (14, 17) mit den Turbinenauslasstemperatursensoren (18, 19) der jeweiligen Turbine (14, 17);
- Identifizieren von Turbinenauslasstemperatursensoren (18, 19) mit guter Datenqualität;
und **gekennzeichnet ist durch**:
- Auswählen einer geeigneten Untergruppe von Turbinenauslasstemperatursensoren (18, 19) mit einer guten Datenqualität, die kleiner ist als eine Gesamtzahl der Turbinenauslasstemperatursensoren (18, 19) mit guter Datenqualität;
- Bilden des Durchschnittswerts der gemessenen Temperaturen der ausgewählten Turbinenauslasstemperatursensoren (18, 19) mit guter Datenqualität, um eine aufbereitete Turbinenauslasstemperatur (TAT TR) zu erhalten; und
- Steuern des Betriebs der Gasturbine (10) mit der aufbereiteten Turbinenauslasstemperatur (TAT TR); wobei die geeignete Untergruppe von Turbinenauslasstemperatursensoren (18, 19) mit guter Datenqualität die Turbinenauslasstemperatursensoren (18, 19) mit guter Datenqualität und mit den höchsten Messwerten umfasst.

2. Verfahren nach Anspruch 1, **dadurch gekennzeichnet, dass** der erste Brennstoffstrom null ist und dass der zweite Brennstoffstrom größer als null ist.

3. Verfahren nach einem der Ansprüche 1 bis 2, **dadurch gekennzeichnet, dass** die geeignete Untergruppe der Turbinenauslasstemperatursensoren (18, 19) mit guter Datenqualität ausgewählt wird, um die aufbereitete Turbinenauslasstemperatur (TAT TR) zu erhalten, und dadurch, dass die geeignete Untergruppe aus den i höchsten bis j höchsten Turbinenauslasstemperatursensoren (18, 19) mit guter Datenqualität besteht,
wobei i und j natürliche Zahlen sind, i 2 oder größer als 2 ist, j gleich oder größer als i ist, und i und j kleiner als die Gesamtzahl der Auslasstemperatursensoren (18, 19) mit guter Datenqualität sind.

4. Verfahren nach einem der Ansprüche 1 bis 2, **dadurch gekennzeichnet, dass** die geeignete Untergruppe der Turbinenauslasstemperatursensoren (18, 19) mit guter Datenqualität ausgewählt wird, um die aufbereitete Turbinenauslasstemperatur (TAT TR) zu erhalten, und dadurch, dass die geeignete Untergruppe mindestens einen Turbinenauslasstemperatursensor (18, 19) mit guter Datenqualität umfasst, der in einer Umfangsrichtung um die Achse der Gasturbine (10) von der Umfangsposition eines Brenners (24, 25), dem der zweite Brennstoffstrom zugeführt wird, um einen Versatzwinkel (Δα) versetzt ist, wobei der Versatzwinkel (Δα) dem Umfangsversatz um die Achse der Gasturbine (10) entspricht, welchem das Heißgas unterzogen wird, wenn es von der Brennkammer (13, 16) durch die Turbine (14, 16) zu den Turbinenauslasstemperatursensoren (18, 19) mit guter Datenqualität fließt.

5. Verfahren nach einem der Ansprüche 1 bis 2, **dadurch gekennzeichnet, dass** die geeignete Untergruppe der Turbinenauslasstemperatursensoren (18, 19) mit guter Datenqualität ausgewählt wird, um die aufbereitete Turbinenauslasstemperatur (TAT TR) zu erhalten, und dadurch, dass die geeignete Untergruppe mindestens einen Turbinenauslasstemperatursensor (18, 19) mit guter Datenqualität ausschließt, der in einer Umfangsrichtung um die Achse der Gasturbine (10) von der Umfangsposition eines Brenners (24, 25), dem der erste Brennstoffstrom zugeführt wird, um einen Versatzwinkel (Δα) versetzt ist, wobei der Versatzwinkel (Δα) dem Umfangsversatz um die Achse der Gasturbine (10) entspricht, welchem das Heißgas unterzogen wird, wenn es von der Brennkammer (13, 16) durch die Turbine (14, 16) zu den Turbinenauslasstemperatursensoren (18, 19) mit guter Datenqualität fließt.

6. Verfahren nach einem der Ansprüche 1 bis 5, **dadurch gekennzeichnet, dass** eine durchschnittliche Turbineneinlasstemperatur (TIT AVG) unter Verwendung der durchschnittlichen Turbinenauslasstemperatur (TAT AVG) auf der Basis aller Turbinenauslasstemperatursensoren (18, 19) mit guter Datenqualität berechnet wird,
und dadurch, dass eine aufbereitete Turbineneinlasstemperatur (TIT TR) unter Verwendung der aufbereiteten Turbinenauslasstemperatur (TAT TR) berechnet wird,
und dadurch, dass der höhere Wert der durchschnittlichen Turbineneinlasstemperatur (TIT AVG) und der aufbereiteten Turbineneinlasstemperatur (TIT TR) zur Steuerung des Betriebs der Gasturbine (10) verwendet wird.

7. Verfahren nach einem der Ansprüche 1 bis 5, **dadurch gekennzeichnet, dass** eine durchschnittliche Turbinenauslasstemperatur (TAT AVG) auf der Basis aller Turbinenauslasstemperatursensoren (18, 19) mit guter Datenqualität zur Steuerung des Betriebs der Gasturbine (10) verwendet wird, wenn ein die Betriebsbedingungen der Gasturbine (10) anzeigender Parameter über einem Schwellenwert liegt, und dadurch, dass die aufbereitete Turbinenauslasstemperatur (TAT TR) zur Steuerung des Betriebs der Gasturbine (10) verwendet wird, wenn der die Betriebsbedingungen der Gasturbine (10) anzeigende Parameter unter dem Schwellenwert liegt.

8. Verfahren nach einem der Ansprüche 1 bis 7, **dadurch gekennzeichnet, dass** ein Turbineneinlasstemperaturfehler (TIT ERR) auf der Basis einer durchschnittlichen Turbinenauslasstemperatur (TAT AVG) berechnet wird, dadurch, dass ein aufbereiteter Heißgasfehler (THG TR ERR) auf der Basis der aufbereiteten Turbinenauslasstemperatur (TAT TR) berechnet wird, dadurch, dass der Turbineneinlasstemperaturfehler (TIT ERR) und der aufbereitete Heißgasfehler (THG TR ERR) skaliert werden, sodass sie aneinander angepasst sind, und dadurch, dass der untere Wert der skalierten Temperaturfehler zur Steuerung und zum Schutz der Gasturbine (10) verwendet wird.

9. Verfahren nach Anspruch 8, **dadurch gekennzeichnet, dass** der Turbineneinlasstemperaturfehler (TIT ERR) mit einem Skalierungsfaktor multipliziert wird, um einen skalierten Heißgastemperaturfehler (THG ERR) zu erhalten, oder dadurch, dass der aufbereitete Heißgastemperaturfehler (THG TR ERR) durch den Skalierungsfaktor dividiert wird, um einen aufbereiteten Einlasstemperaturfehler (TIT TR ERR) zu erhalten.

10. Verfahren nach Anspruch 8 oder 9, **dadurch gekennzeichnet, dass** der Skalierungsfaktor eine Funktion mindestens eines der Werte der Gasturbinenlast, des Einlasswinkels einer verstellbaren Einlassleitschaufel (VIGV), der Turbineneinlasstemperatur (TIT) und der durchschnittlichen Turbinenauslasstemperatur (TAT AVG) ist.

11. Verfahren nach einem der Ansprüche 1 bis 10, **dadurch gekennzeichnet, dass** es an einer Gasturbine mit sequenzieller Verbrennung angewandt wird, die eine erste Brennkammer (13), eine erste Turbine (14) stromabwärts der ersten Brennkammer (13), eine Gesamtzahl von ersten Turbinenauslasstemperatursensoren (18) und eine zweite Brennkammer (16) stromabwärts der ersten Turbine (14) und eine zweite Turbine (17) stromabwärts der zweiten Brennkammer (16) aufweist,
und dadurch, dass ein Durchschnitt der ausgewählten ersten Turbinenauslasstemperatursensoren (18) der ersten Turbine (14) gebildet wird, um eine aufbereitete erste Turbinenauslasstemperatur (TAT1 TR) zu erhalten.

12. Verfahren nach einem der Ansprüche 1 bis 10, **dadurch gekennzeichnet, dass** es an einer Gasturbine mit sequenzieller Verbrennung angewandt wird, die eine erste Brennkammer (13), eine erste Turbine (14) stromabwärts der ersten Brennkammer (13), eine zweite Brennkammer (16) stromabwärts der ersten Turbine (14), eine zweite Turbine (17) stromabwärts der zweiten Brennkammer (16) und eine Gesamtzahl von zweiten Turbinenauslasstemperatursensoren (19) stromabwärts der zweiten Turbine (17) aufweist,
und dadurch, dass ein Durchschnitt der ausgewählten zweiten Turbinenauslasstemperatursensoren (19) der zweiten Turbine (17) gebildet wird, um eine aufbereitete zweite Turbinenauslasstemperatur (TAT2 TR) zu erhalten.

13. Gasturbine (10), aufweisend einen Kompressor (12), mindestens eine Brennkammer (13, 16), mindestens eine Turbine (14, 17) stromabwärts der Brennkammer (13, 16), eine Gesamtzahl von Turbinenauslasstemperatursensoren (18, 19) und eine Steuereinrichtung (20), **dadurch gekennzeichnet, dass** die Steuereinrichtung (20) dafür konfiguriert ist, das Verfahren nach einem der Ansprüche 1 bis 12 auszuführen.

## Revendications

1. Procédé de fonctionnement d'une turbine à gaz (10), la turbine à gaz (10) comprenant un compresseur (12), au moins une chambre de combustion (13, 16) avec au moins deux brûleurs (24, 25), au moins une turbine (14, 17) en aval de la chambre de combustion (13, 16), et une pluralité de capteurs de température en sortie de turbine (18, 19), le procédé comprenant les étapes ci-dessous consistant à :
- fournir un premier débit de combustible à l'un des brûleurs (24, 25) d'une chambre de combustion (13, 16), et fournir un second débit de combustible à un autre des brûleurs (24, 25) de la même chambre de combustion (13, 16), le premier débit de combustible étant inférieur au second débit de combustible ;
- mesurer la température en sortie de turbine de la turbine (14, 17) avec les capteurs de température en sortie de turbine (18, 19) de la turbine respective (14, 17) ;
- identifier des capteurs de température en sortie de turbine (18, 19) offrant une bonne qualité de données ; et **caractérisé par** les étapes ci-dessous consistant à :
- sélectionner un sous-ensemble approprié de capteurs de température en sortie de turbine (18, 19) offrant une bonne qualité de données, lequel est inférieur au nombre total des capteurs de température en sortie de turbine (18, 19) offrant une bonne qualité de données ;
- calculer la moyenne des températures mesurées des capteurs de température en sortie de turbine sélectionnés (18, 19) offrant une bonne qualité de données, en vue d'obtenir une température en sortie de turbine ajustée (TAT TR) ; et
- commander le fonctionnement de la turbine à gaz (10) avec la température en sortie de turbine ajustée (TAT TR) ; où le sous-ensemble approprié de capteurs de température en sortie de turbine (18, 19) offrant une bonne qualité de données comprend les capteurs de température en sortie de turbine (18, 19) offrant une bonne qualité de données et présentant les valeurs de mesure les plus élevées.

2. Procédé selon la revendication 1, **caractérisé en ce que** le premier débit de combustible est nul, et **en ce que** le second débit de combustible est supérieur à zéro.

3. Procédé selon l'une quelconque des revendications 1 à 2, **caractérisé en ce que** le sous-ensemble approprié des capteurs de température en sortie de turbine (18, 19) offrant une bonne qualité de données est sélectionné en vue d'obtenir la température en sortie de turbine ajustée (TAT TR), et **en ce que** le sous-ensemble approprié consiste en les « i » à « j » capteurs de température en sortie de turbine (18, 19) les plus élevés offrant une bonne qualité de données, où « i » et « j » sont des nombres naturels, « i » est égal ou supérieur à 2, « j » est égal ou supérieur à « i », et « i » et « j » sont inférieurs au nombre total de capteurs de température en sortie (18, 19) offrant une bonne qualité de données.

4. Procédé selon l'une quelconque des revendications 1 à 2, **caractérisé en ce que** le sous-ensemble approprié des capteurs de température en sortie de turbine (18, 19) offrant une bonne qualité de données est sélectionné en vue d'obtenir la température en sortie de turbine ajustée (TAT TR), et **en ce que** le sous-ensemble approprié comprend au moins un capteur de température en sortie de turbine (18, 19) offrant une bonne qualité de données qui est décalé dans une direction périphérique autour de l'axe de la turbine à gaz (10) par rapport à la position périphérique d'un brûleur (24, 25) auquel un second débit de combustible est fourni, d'un angle de décalage (Δα), l'angle de décalage (Δα) correspondant au décalage périphérique autour de l'axe de la turbine à gaz (10) auquel le gaz chaud est soumis lorsqu'il transite de la chambre de combustion (13, 16), à travers la turbine (14, 16), vers les capteurs de température en sortie de turbine (18,19) offrant une bonne qualité de données.

5. Procédé selon l'une quelconque des revendications 1 à 2, **caractérisé en ce que** le sous-ensemble approprié des capteurs de température en sortie de turbine (18, 19) offrant une bonne qualité de données est sélectionné en vue d'obtenir la température en sortie de turbine ajustée (TAT TR), et **en ce que** le sous-ensemble approprié exclut au moins un capteur de température en sortie de turbine (18, 19) offrant une bonne qualité de données, lequel est décalé dans une direction périphérique autour de l'axe de la turbine à gaz (10) par rapport à la position périphérique d'un brûleur (24, 25) auquel un premier débit de combustible est fourni, d'un angle de décalage (Δα), l'angle de décalage (Δα) correspondant au décalage périphérique autour de l'axe de la turbine à gaz (10) auquel le gaz chaud est soumis lorsqu'il transite de la chambre de combustion (13, 16), à travers la turbine (14, 16), vers les capteurs de température en sortie de turbine (18,19) offrant une bonne qualité de données.

6. Procédé selon l'une quelconque des revendications 1 à 5, **caractérisé en ce qu'**une température en entrée de turbine moyenne (TIT AVG) est calculée en utilisant la température en sortie de turbine moyenne (TAT AVG) sur la base de tous les capteurs de température en sortie de turbine (18, 19) offrant une bonne qualité de données, et **en ce qu'**une température en entrée de turbine ajustée (TIT TR) est calculée en utilisant la température en sortie de turbine ajustée (TAT TR) et **en ce que** la valeur la plus élevée parmi la température en entrée de turbine moyenne (TIT AVG) et la température en entrée de turbine ajustée (TIT TR) est utilisée en vue de commander le fonctionnement de la turbine à gaz (10).

7. Procédé selon l'une quelconque des revendications 1 à 5, **caractérisé en ce qu'**une température en sortie de turbine moyenne (TAT AVG) basée sur tous les capteurs de température en sortie de turbine (18, 19) offrant une bonne qualité de données est utilisée en vue de commander le fonctionnement de la turbine à gaz (10) lorsqu'un paramètre indicatif de l'état de fonctionnement de la turbine à gaz (10) dépasse une valeur de seuil, et **en ce que** la température en sortie de turbine ajustée (TAT TR) est utilisée en vue de commander le fonctionnement de la turbine à gaz (10) lorsque le paramètre indicatif de l'état de fonctionnement de la turbine à gaz (10) est inférieur à ladite valeur de seuil.

8. Procédé selon l'une quelconque des revendications 1 à 7, **caractérisé en ce qu'**une erreur de température en entrée de turbine (TIT ERR) est calculée sur la base d'une température moyenne en sortie de turbine (TAT AVG), **en ce qu'**une erreur de gaz chaud ajustée (THG TR ERR) est calculée sur la base de la température en sortie de turbine ajustée (TAT TR), **en ce que** l'erreur de température en entrée de turbine (TIT ERR) et l'erreur de température de gaz chaud ajustée (THG TR ERR) sont mises à l'échelle en vue d'une correspondance mutuelle, et **en ce que** la valeur inférieure des erreurs de température mises à l'échelle est utilisée pour la commande et la protection de la turbine à gaz (10).

9. Procédé selon la revendication 8, **caractérisé en ce que** l'erreur de température en entrée de turbine (TIT ERR) est multipliée par un facteur d'échelle en vue d'obtenir une erreur de température de gaz chaud mise à l'échelle (THG ERR), ou **en ce que** l'erreur de température de gaz chaud ajustée (THG TR ERR) est divisée par le facteur d'échelle en vue d'obtenir une erreur de température en entrée ajustée (TIT TR ERR).

10. Procédé selon la revendication 8 ou 9, **caractérisé en ce que** le facteur d'échelle est une fonction d'au moins l'une des caractéristiques parmi la charge de turbine à gaz, l'angle d'entrée d'une aube de guidage d'entrée variable (VIGV), la température en entrée de turbine (TIT), et la température en sortie de turbine moyenne (TAT AVG).

11. Procédé selon l'une quelconque des revendications 1 à 10, **caractérisé en ce qu'**il est appliqué à une turbine à gaz à combustion séquentielle présentant une première chambre de combustion (13), une première turbine (14) en aval de la première chambre de combustion (13), un nombre total de premiers capteurs de température en sortie de turbine (18) et une seconde chambre de combustion (16) en aval de ladite première turbine (14), et une seconde turbine (17) en aval de ladite seconde chambre de combustion (16), et **en ce qu'**est calculée la moyenne des premiers capteurs de température en sortie de turbine sélectionnés (18) de la première turbine (14), en vue d'obtenir une première température en sortie de turbine ajustée (TAT1 TR).

12. Procédé selon l'une quelconque des revendications 1 à 10, **caractérisé en ce qu'**il est appliqué à une turbine à gaz à combustion séquentielle présentant une première chambre de combustion (13), une première turbine (14) en aval de la première chambre de combustion (13), une seconde chambre de combustion (16) en aval de ladite première turbine (14), et une seconde turbine (17) en aval de ladite seconde chambre de combustion (16), et un nombre total de seconds capteurs de température en sortie de turbine (19) en aval de la seconde turbine (17), et **en ce qu'**est calculée la moyenne des seconds capteurs de température en sortie de turbine sélectionnés (19) de la seconde turbine (17), en vue d'obtenir une seconde température en sortie de turbine ajustée (TAT2 TR).

13. Turbine à gaz (10), comprenant un compresseur (12), au moins une chambre de combustion (13, 16), au moins une turbine (14, 17) en aval de la chambre de combustion (13, 16), un nombre total de capteurs de température en sortie de turbine (18, 19), et un contrôleur (20), **caractérisée en ce que** le contrôleur (20) est configuré de manière à mettre en oeuvre le procédé selon l'une quelconque des revendications 1 à 12.
